# EUROPEAN PATENT SPECIFICATION

(11) **EP 4 672 713 B1**
(45) Date of publication and mention of the grant of the patent: **09.12.2026**
(21) Application number: 24306027.4
(22) Date of filing: 26.06.2024
(51) Int. Cl.: H04L 65/752, H04L 65/75, H04L 65/80, H04L 67/12

(54) **METHOD FOR OPTIMIZING DATA TRANSMISSION IN A MULTI-AGENT SYSTEM**
VERFAHREN ZUR OPTIMIERUNG DER DATENÜBERTRAGUNG IN EINEM MULTIAGENTENSYSTEM
PROCÉDÉ D'OPTIMISATION DE TRANSMISSION DE DONNÉES DANS UN SYSTÈME MULTI-AGENTS

(43) Date of publication of application: 31.12.2025
(73) Proprietor: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: SIBEL, Jean-Christophe, 35708 RENNES CEDEX 7 (FR); GRESSET, Nicolas, 35708 RENNES CEDEX 7 (FR); BOUTTIER, Arnaud, 35708 RENNES CEDEX 7 (FR); BECHIHI, Adel, 35708 RENNES CEDEX 7 (FR)
(74) Representative: Plasseraud IP

(56) References cited:
- US-A1- 2022 094 629
- US-B1- 11 606 409

## Description

### FIELD OF INVENTION

The present invention relates to the field of data transmission in multi-agent systems. Specifically, it focuses on optimizing data transmission to ensure low end-to-end latency and high performance. The invention is particularly applicable to systems involving multiple agents capturing and transmitting various types of data, such as video streams, images, and LiDAR measurements, to one or more receivers through a shared communication network.

### BACKGROUND

In recent years, multi-agent systems have gained significant attention in various fields, such as robotics, surveillance, and industrial automation. These systems typically consist of multiple agents, each equipped with sensors for capturing data, processors for encoding and transmitting the data, and communication modules for sending the data to one or more receivers. The receivers, in turn, process the received data to make decisions, control the agents, or perform other tasks based on the information gathered by the agents.

One critical challenge in multi-agent systems is ensuring efficient and reliable data transmission while minimizing end-to-end (E2E) latency and maximizing performance. This challenge is particularly evident in applications fed by N flows, such as video streaming applications where each flow is responsible for a pre-defined geometrical portion of the video frames, geolocation applications where each flow is responsible for a pre-defined portion of the map, or multi-player video games where each flow represents the scenery of the associated game. In these applications, the flows originate from entities deployed in various geographical areas, while the application endpoint is located in another geographical area.

For example, in a remote monitoring scenario, video, image, or LiDAR measurement streams from UAVs monitoring different geographical areas are transmitted to a computer used by a teleoperator. The teleoperator performs fusion or integration of the input streams to reconstruct the scene. In another example, image streams, sound streams, and other data streams from local computers used by remote gamers are transmitted to another remote gamer's computer to obtain a split-screen display. In a third example, geographical positions of sensors embedded on animals are transmitted to a remote observer who monitors the global dynamical behavior of potential groups within the identified animals, such as swarms of birds, clouds of insects, or shoals of fish.

The application in these scenarios comprises, at least, a mechanism for merging the N separate flows to reconstruct a full scene in real-time or -near real-time. The notion of real-time implies that one of the most important performance metrics of the complete application is the end-to-end latency, which is the time duration between the moment the data is captured and the moment the application displays the data. This latency includes the time required for capturing, encoding, transmitting, receiving, and decoding the data.

When considering the flows independently, a competition perspective arises, wherein every flow is treated independently regarding the allocation of communication resources. In this case, there is no guarantee that the application meets relevant performance, even though some individual flows may. Consequently, the global E2EL may not be respected, resulting in a poor end-user experience.

When considering the flows in a cooperative perspective, every flow is treated in a plural manner. In this case, the flows may reach some minimum performance regarding communication, but there is still no guarantee that the underlying multi-agent application meets its requirements.

Existing solutions for data transmission in multi-agent systems often treat encoding and communication parameters separately. Encoding parameters, such as video bitrate, compression level, and resolution, are typically chosen based on the agent's capabilities and the desired data quality. On the other hand, communication parameters, such as bandwidth allocation, transmission power, and modulation scheme, are selected based on the available network resources and the required transmission range.

However, treating encoding and communication parameters independently can lead to suboptimal performance. For instance, an agent may encode data at a high bitrate to ensure high quality, but if the communication channel cannot support the required bandwidth, the data may be delayed, dropped, or corrupted during transmission. Conversely, allocating more bandwidth to an agent may not improve performance if the encoded data quality is low due to suboptimal encoding parameters.

Moreover, in multi-agent systems, the available network resources are often limited and shared among the agents. Each agent's data transmission requirements may vary based on the type of data, the scene complexity, and the receiver's requirements. Allocating resources fairly and efficiently among the agents while ensuring the desired end-to-end latency and performance for each agent is a challenging task.

Another issue arises when multiple agents transmit data simultaneously, leading to interference and contention for network resources. This can result in increased latency, reduced throughput, and degraded performance. Coordinating the transmissions of multiple agents to minimize interference and optimize resource utilization is crucial for the overall system performance.

Existing solutions often rely on static resource allocation schemes or simple heuristics for selecting encoding and communication parameters. These approaches may not adapt well to dynamic environments, where the number of agents, the types of data, and the network conditions may change over time. Furthermore, these solutions often do not consider the interdependence between the encoding and communication parameters, leading to suboptimal performance.

In this regard, the main problem to be addressed by the present invention is: How to manage the flow settings regarding the QoS and the data settings (compression, traffic) to meet the E2E requirement of the multi-agent application?

Moreover, other problems in the art that need to be addressed include:
1. High end-to-end latency due to suboptimal selection of encoding and communication parameters.
2. Degraded performance and data quality due to treating encoding and communication parameters independently.
3. Inefficient resource utilization and unfair allocation among multiple agents sharing the same communication network.
4. Interference and contention among multiple agents transmitting simultaneously, leading to increased latency and reduced throughput.
5. Lack of adaptability to dynamic environments with varying numbers of agents, data types, and network conditions.

The present invention aims to address these challenges in the art to optimize data transmission in a multi-agent system. US 2022/094629 A1 and US 11 606 409 B1 describe related systems of the prior art.

### SUMMARY

In this regard, according to one aspect of the invention, it is provided a method according to claim 1 for optimizing data transmission in a multi-agent system, comprising:
- obtaining raw data streams respectively from at least two agents;
- classifying the received raw data streams based on predetermined characteristics;
- obtaining requirements regarding end-to-end (E2E) latency and performance metrics from at least one node of the multi-agent system, wherein said node could be at least one receiver, or at least one agent, or one server connected to the agents and in charge of computing and providing the requirements ;
- obtaining a set of interdependent QoS requests for the raw data streams suitable for data transmission via a communication system, such as a 5G network;
- computing a figure of merit (FOM) for all the raw data streams based on the classified raw data streams, the receiver requirements, and the set of interdependent QoS requests; and
- encoding the raw data streams and transmitting through the communication system the encoded data streams to the receiver according to the computed figure of merit.

With such an arrangement, the present invention provides a holistic approach to optimizing data transmission by considering multiple factors, such as raw data stream classification, node requirements, and interdependent QoS requests. This comprehensive optimization ensures that the system achieves the best possible performance while meeting the specific needs of an application. In particular, by classifying raw data streams based on predetermined characteristics, the method can adapt the encoding and communication parameters to the specific requirements of each data stream. This adaptability enables the invention to handle various data types, such as video, images, and LiDAR measurements, making it suitable for a wide range of multi-agent scenarios. In addition, the method according to the invention involves obtaining a set of interdependent QoS requests for the raw data streams, which ensures an efficient management of the QoS flows to maximize the probability of success of the communication links of the agents and thereby the probability of success of the system. This also leads to improved resource utilization and better overall system performance. Moreover, by obtaining end-to-end (E2E) latency and performance metric requirements from the node, the method ensures that the system provides a tailored solution that meets the specific needs of each application. This approach leads to an enhanced end-user experience, as the system can deliver data with minimal latency and optimal quality.

In addition to the above discussed features, it should be noted the core of the invention lies in computing a figure of merit for all the raw data streams based on the classified streams, node requirements, and interdependent QoS requests. The figure of merit is a performance metric that characterizes the performance of a device, system, or method, relative to its alternatives. In the present invention, the figure of merit is, for example, the result of the optimization problem, either joint or single, that provides the performance of the system in terms of E2E-latency and quality.

In addition, in the present invention, QoS interdependency refers to the relationship or influence between the QoS performance of different communication links when they are serving a common application. In traditional networks, the central node (e.g., a base station) manages the links of different users independently, assuming that the users' applications are independent. However, in certain scenarios, such as 5G-enabled vertical applications, multiple users may share a common application layer, and the QoS performance of their links becomes interdependent. This means that the QoS performance of one link can affect the QoS performance of other links, which affects the performance of the common application as they are all contributing to the same said common application. By understanding and leveraging this QoS interdependency, it becomes possible to optimize the overall performance of the application, as the network is made to manage the links collaboratively . This is particularly relevant in scenarios where the common application has specific requirements or a joint figure of merit that depends on the combined performance of all the links involved.

According to one embodiment of the present invention, computing a figure of merit comprises:
- formulating a joint optimization problem to select optimal encoding and communication parameters for all agents, considering the node requirements for the encoding parameters and the communication system's constraints; and
- solving the joint optimization problem using a bi-optimization approach, prioritizing the minimization of the maximum end-to-end (E2E) latency among all encoded data streams and the maximization of the rendering quality among all encoded data streams, wherein the rendering quality is a metric valued according to the receiver expectation, e.g., the objective metrics like Naturalness Image Quality Evaluator (NIQE), or the Blind Referencesless Image Spatial Quality Evaluator, or the Video-BLIINDS (BRISQUE), or the subjective metrics like the Mean Opinion Score (MOS).

This involves formulating a joint optimization problem to select optimal encoding and communication parameters for all agents. The optimization problem considers the node requirements for the encoding parameters and the communication system's constraints. The invention solves this problem using a bi-optimization approach, prioritizing the minimization of the maximum E2E latency and the maximization of the rendering quality across all data streams. This approach ensures that the invention provides the best possible performance while meeting the latency and quality requirements.

For such a joint optimization problem, the present invention provides a double nested loop solution, considering the Pareto front of the bi-optimization problem. Alternatively, the present invention also proposes to employ Al-based methods, such as linear programming, gradient-search, or genetic algorithms, to solve the joint optimization problem.

According to another embodiment of the present invention, computing a figure of merit comprises:
- formulating a single optimization problem to select encoding and communication parameters for all agents, considering the node requirements for the encoding parameters and the communication system's constraints;
- solving the single optimization problem using a weighted sum method, which combines the objectives of minimizing end-to-end (E2E) latency and maximizing rendering quality, wherein the balance between these objectives can be adjusted based on the end-user guidelines.

This presents an alternative approach to computing the figure of merit, which involves formulating a single optimization problem to select encoding and communication parameters for all agents. This approach may use a weighted sum method to combine the objectives of minimizing E2E latency and maximizing rendering quality. The balance between these objectives can be adjusted based on the end-user guidelines, providing flexibility in adapting the invention to various scenarios.

Similar to the first approach of joint optimization problem, the present invention also proposes to employ Al-based methods, such as linear programming, gradient-search, or genetic algorithms, to solve the single optimization problem.

These advanced optimization techniques enable the invention to adapt to dynamic environments and improve performance over time.

Optionally, the figure of merit includes encoding and communication parameters for all the raw data streams, which serves as a comprehensive metric for optimizing data transmission. By jointly considering these factors, the invention can find the optimal trade-off between latency, performance, and trade-off between latency and quality offering a performant common application and an efficient resource utilization..

Optionally, the communication parameters include at least one of Guaranteed Flow Bit Rate (GFBR), averaging time window, Packet Delay Budget (PDB), Packet Error Rate (PER), beamforming setting, antenna setting, frequency band. These parameters provide fine-grained control over the data transmission process, enabling the invention to adapt to various network conditions and requirements.

Optionally, the communication system is a configurable QoS-based communication network, which allows the invention to leverage advanced QoS mechanisms for optimal performance. For example, under the configurable QoS-based communication network, the step of obtaining a set of interdependent QoS requests comprises determining a set of QoS profiles that can be concurrently supported by the communication system while meeting the node requirements. By considering the interdependence of QoS requests, the invention ensures efficient QoS managementand minimizes interference among multiple agents transmitting simultaneously.

Optionally, the present invention can handle various types of raw data streams, such as video streams, JPEG image streams, and LiDAR measurement streams. Each data type has its specific encoding parameters, which the invention takes into account when computing the figure of merit. For video streams, the encoding parameters may include video bitrate, Constant Rate Factor (CRF), quantization parameter, resolution, color depth, and sub-sampling. For JPEG image streams, the encoding parameters may include quantization of frequency components, color depth, and sub-sampling. For LiDAR measurement streams, the encoding parameters may include puncturing and averaging of measurement points. This adaptability enables the invention to be applied in a wide range of multi-agent scenarios, from video surveillance to autonomous vehicle navigation.

Optionally, the predetermined characteristics for classifying the captured raw data streams include at least one of scene content, motion, and complexity. In this regard, the classification step enables to adapt the encoding and communication parameters to the specific requirements of each data stream, improving overall performance and resource utilization.

According to another aspect of the invention, it is provided a multi-agent system for optimizing data transmission according to claim 12, comprising:
- a plurality of agents, each agent including:
   - a sensor for capturing a scene and obtaining a raw data stream;
   - a stream classifier for classifying the captured raw data stream based on predetermined characteristics;
   - an encoder for encoding the raw data stream using a figure of merit; and
   - a transmitter for transmitting the encoded data stream to a node of the multi-agent system according to the figure of merit;
- at least one node for receiving and decoding the transmitted encoded data streams and providing requirements regarding end-to-end (E2E) latency and performance metrics, wherein said node could be at least one receiver, or at least one agent, or one server connected to the agents and in charge of computing and providing the requirements, alternatively, it is possible that another node, than the one for receiving the transmitted encoded data steam, provides requirements regarding end-to-end (E2E) latency and performance metrics; and
- a computing module for computing the figure of merit for all the raw data streams based on the classified raw data streams, the node requirements, and a set of interdependent QoS requests for raw data streams suitable for data transmission via a communication system.

The system according to the present invention leads to an enhanced end-user experience, as the system can deliver data with minimal latency and optimal rendering quality. Moreover, this system architecture enables the invention to be easily integrated into existing multi-agent systems, providing a plug-and-play solution for optimizing data transmission.

According to yet another aspect of the invention, it is provided a non-transitory computer-readable medium storing instructions that, when executed by a processor, cause the processor to perform the method according to the present invention as discussed above.

In view of above, the present invention at least provides the following advantages:
- Increased efficiency: By jointly considering encoding and communication parameters, the invention minimizes end-to-end latency, maximizes performance, and ensures efficient resource utilization. This increased efficiency leads to better overall system performance and reduced operational costs.
- Adaptability to dynamic environments: The invention's ability to handle various data types and adapt to dynamic environments makes it suitable for a wide range of applications, from video surveillance to autonomous vehicle navigation. This adaptability ensures that the invention remains relevant and effective in the face of evolving multi-agent scenarios.

In summary, the present invention provides a comprehensive and adaptable solution for optimizing data transmission in multi-agent systems. By jointly considering different elements, such as E2E latency, classification, interdependence of QoS request, and figure of merit, the invention minimizes end-to-end latency, maximizes performance, and ensures efficient resource utilization. The invention's ability to handle various data types and adapt to dynamic environments makes it suitable for a wide range of applications, from video surveillance to autonomous vehicle navigation. With its innovative optimization approach and system architecture, the invention represents a significant advancement in the field of multi-agent communication, addressing the key challenges faced by existing solutions.

The characteristics and advantages of other aspects of the present invention will be discussed in the following exemplary embodiments. Those skilled in the art can clearly understand the content of the present invention and the technical effects obtained based on these exemplary embodiments.

### BRIEF DESCRIPTION OF THE DRAWINGS

Other features and advantages of the present invention will appear in the description hereinafter, in reference to the appended drawings, where:
Figure 1 illustrates an exemplary multi-agent system for optimizing data transmission according to the present invention;
Figure 2 is a flowchart illustrating main steps of the method for optimizing data transmission in a multi-agent system according to the present invention.

### DESCRIPTION OF EMBODIMENTS

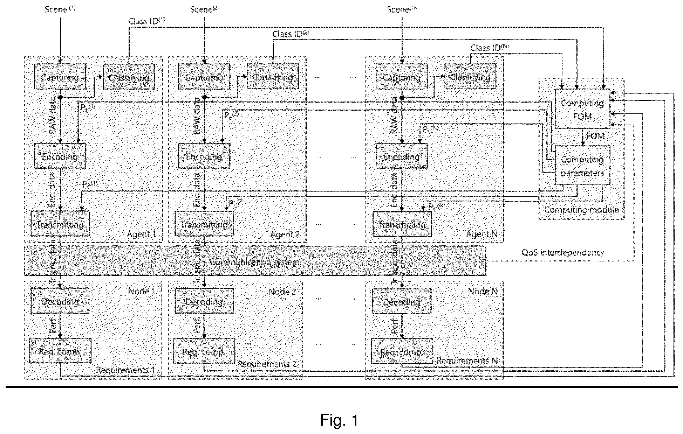

Figure 1 illustrates an exemplary multi-agent system optimizing data transmission according to the present invention.

The system comprises a plurality of agents, each equipped with a sensor for capturing a scene and obtaining a raw data stream. The scene refers to the environment being captured by the agent's sensor, encompassing the content, characteristics, and dynamics of the observed environment. Examples of scenes include a field, a forest, a city, a lake, or any other environment with varying numbers of individuals, objects, and velocities. The scene's characteristics, such as the number of objects, their velocities, and the density of individuals, or other features which could be extracted by a neural network and are good representatives of the scene, play a crucial role in determining the optimal encoding and communication parameters.

The sensor within each agent is responsible for capturing the scene and obtaining raw data, typically in the form of a time sequence of raw frames. The sensor can be a camera, LiDAR, or any other sensing device capable of capturing the desired

data type. For example, in a video streaming scenario, the sensor would be a camera capturing raw video frames. The sensor's hardware settings, such as camera aperture, resolution, frame rate, and color depth, affect the quality and size of the captured raw data.

Each agent also includes a stream classifier that analyzes and categorizes the captured raw data stream based on predetermined characteristics. The stream classifier assesses the nature and content of the scene, such as the velocity of objects, the quantity of objects, the height of the agent's sensor, and the density of individuals. It can categorize a scene as high or low velocity, high or low object density, or any other relevant classification based on the application requirements. The classification helps determine the encoding parameters suited to the target receiver, ensuring good image rendering quality and efficient data transmission.

The encoder within each agent is responsible for processing the classified raw data stream and converting it into a compressed and optimized format suitable for transmission. The encoder uses specific parameters (PE(n)) determined by the computing module to perform tasks such as segmentation, compression, and packetization. For video streaming, the encoder can use compression standards like H.264, H.265, or H.266. The encoding parameters (PE(n)) can include at least one of, in case of a video, video bitrate, or Constant Rate Factor (CRF), or quantization parameter, or in case of an image, resolution, or quantization parameter, or JPEG compression quality, or in case of a LiDAR measurement, density of points, or puncturing properties, and other settings that impact the quality and size of the encoded data..

The transmitter within each agent is responsible for transmitting/sending the encoded data stream to the receiver through the communication system. It requests a specific Quality of Service (QoS) flow from the network to ensure a well-controlled delivery of the data. In the case of a 5G network, the transmitter requests a (DC-)GBR QoS flow with specific parameters (PC(n)), such as the average window size, Guaranteed Flow Bitrate (GFBR), Packet Delay Budget (PDB), and Packet Error Rate (PER).

The system also includes at least one node of the multi-agent system, such as a receiver, an agent, or a server connected to the agents, responsible for receiving the transmitted encoded data streams from the agents. In the present exemplary embodiment, the node is, for example, a receiver, which includes a decoder that reverses the encoding process, performing tasks such as de-packetization, decompression, and de-segmentation to obtain the original data. In a video streaming scenario, the receiver would receive the encoded video packets, decode them using the appropriate codec, and render the video content for display. The receiver also provides requirements regarding end-to-end (E2E) latency and performance metrics to the computing module, which helps optimize the encoding and communication parameters.

The computing module is a central entity responsible for calculating the optimal encoding parameters (PE(1), PE(2), ..., PE(N)) and communication parameters (PC(1), PC(2), ..., PC(N)) for each agent based on the classified raw data streams, node requirements, and interdependent QoS requests. It formulates and solves an optimization problem, considering factors such as the receiver's expectations regarding rendering quality and E2E-latency, the communication system's constraints, and the QoS interdependency among agents. The computing module determines the optimal encoding parameters, such as video bitrate, CRF, quantization parameter, and resolution, or other parameters for images and LiDAR, as well as the optimal communication parameters, such as GFBR, PDB, and PER, to ensure the best possible rendering quality and the lowest E2E latency for all agents.

The multi-agent system in the present invention leverages the interaction and collaboration among these elements to optimize data transmission. The agents capture scenes, classify the raw data streams, encode them using the optimal parameters provided by the computing module, and transmit the encoded data through the communication network by using well suited communication parameters defined by the computing module. The receiver receives and decodes the data, providing feedback on the required latency and performance metrics, wherein the entity responsible for setting the requirements would be separate from the receiver itself. The computing module continuously optimizes the encoding and communication parameters based on the classified data, node requirements, and QoS interdependency, ensuring efficient and high-quality data transmission in the multi-agent system.

By jointly considering the encoding and communication parameters, the present invention achieves optimal performance in terms of rendering quality and end-to-end latency. The system adapts to the specific characteristics of each scene and the requirements of the target receiver, ensuring efficient resource utilization and minimizing interference among multiple agents. The dynamic optimization performed by the computing module enables the system to handle varying network conditions and maintain the desired performance levels.

In addition, in Figure 1, "Enc. data" means "encoded data", "Tr. enc. data" means "transmitted encoded data", "Perf." means "performance" and "Req. comp." means "requirements computation".

The detailed optimization implemented by these elements is now described in detail hereinafter.

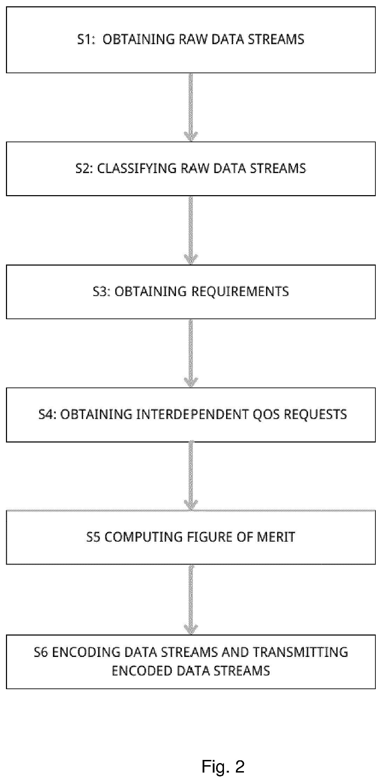

Referring to Figure 2, according to the present invention, an exemplary method for optimizing data transmission in a multi-agent system may comprises the following main steps:

### - S1: OBTAINING RAW DATA STREAMS

The method begins by obtaining raw data streams from at least two agents. Each agent is equipped with a sensor that captures a scene and generates a raw data stream. The raw data can be in various formats, such as video, images, or LiDAR measurements, depending on the type of sensor used. In a typical scenario, the raw data is captured as a time series of frames or measurements, each representing a snapshot of the scene at a particular instant.

### - S2: CLASSIFYING RAW DATA STREAMS

Once the raw data streams are received, they are classified based on predetermined characteristics. These characteristics may include scene content, motion, and complexity. The classification step is crucial for adapting figure of merit, such as the encoding and communication parameters, to the specific requirements of each data stream.

For example, a video stream capturing a busy street with multiple moving vehicles would be classified as having high motion and complexity, while a video stream of a static landscape would be classified as having low motion and complexity. Similarly, a LiDAR measurement stream capturing a dense forest would be classified as having high complexity, while a measurement stream of an open field would be classified as having low complexity.

The classification process can be for example performed using various techniques, such as machine learning algorithms, rule-based systems, or a combination of both. The specific technique used may depend on the type of data and the available computational resources.

### - S3: OBTAINING REQUIREMENTS

The next step involves obtaining the end-to-end (E2E) latency and performance metric requirements from at least one receiver. The E2E latency represents the total time taken for the data to travel from the agent's sensor to the receiver's application layer, including the time required for capturing, encoding, transmitting, receiving, and decoding the data. The performance metrics, on the other hand, represent the quality or accuracy of the received data, such as video resolution, frame rate, or point cloud density.

The receiver requirements may vary depending on the specific application and the limitations of the communication system. For example, in a video surveillance application, the receiver may require a minimum frame rate and resolution to ensure accurate object detection and tracking. In an autonomous vehicle navigation application, the receiver may require a minimum E2E latency to ensure real-time decision-making and control.

Obtaining the receiver requirements is essential for optimizing the data transmission process. By taking into account the receiver's expectations and constraints, the invention can provide a tailored solution that meets the specific needs of each application.

### - S4: OBTAINING INTERDEPENDENT QOS REQUESTS

In the present invention, QoS interdependency refers to the operational framework within a network that defines how different QoS profiles can coexist compatibly and effectively. In environments such as 5G networks, where resources are dynamically shared among multiple users and applications, QoS interdependency is crucial for ensuring that the network can accommodate the simultaneous service demands without conflicts. This concept involves determining which combinations of QoS profiles, when activated concurrently, will not exceed the network's capacity, thereby avoiding degradation in service quality for any user.

In this regard, next step in the invention is obtaining a set of interdependent Quality of Service (QoS) requests for the raw data streams. QoS refers to the ability of the communication system to provide different levels of service to different data streams based on their specific requirements. The interdependent QoS requests represent a set of QoS profiles that can be concurrently supported by the communication system while meeting the receiver's requirements.

The QoS profiles may include parameters such as Guaranteed Flow Bit Rate (GFBR), averaging time window, Packet Delay Budget (PDB), and Packet Error Rate (PER). These parameters provide fine-grained control over the data transmission process and enable the communication system to allocate resources effectively among multiple agents.

For example, a video stream with high motion and complexity may require a higher GFBR and a shorter PDB to ensure smooth playback and low latency, while a LiDAR measurement stream with low complexity may require a lower GFBR and a longer averaging time window to reduce the transmission overhead.

Obtaining the interdependent QoS requests is crucial for optimizing the data transmission process in a multi-agent system. By considering the QoS requirements of all agents simultaneously, the invention can ensure efficient resource allocation and minimize interference among multiple agents transmitting concurrently.

### - S5 COMPUTING FIGURE OF MERIT

The core of the invention lies in computing a figure of merit (FOM) for all the raw data streams based on the classified streams, receiver requirements, and interdependent QoS requests. The FOM is a comprehensive metric that captures the optimal trade-off between E2E latency and performance given the available resource utilization for each data stream. In the present invention, FOM can be defined as a performance metric that characterizes the performance of a device, system, or method, relative to its alternatives

The FOM may include encoding and communication parameters for all the raw data streams, as described in Claim 2. The encoding parameters determine how the raw data is compressed and formatted before transmission, while the communication parameters determine how the encoded data is transmitted over the communication system.

Computing the FOM involves formulating a joint or a single optimization problem that takes into account the requirements for the encoding parameters and the communication system's constraints.

For a joint optimization problem, it can be solved, for example, using a bi-optimization approach for a joint optimization, which prioritizes the minimization of the maximum E2E latency and the maximization of the rendering quality across all data streams.

The bi-optimization approach ensures that the invention provides the best possible performance while meeting the latency and quality requirements of each receiver. The specific optimization techniques used may vary depending on the complexity of the problem and the available computational resources. For example, the invention may use a double nested loop solution that considers the Pareto front of the bi-optimization problem, or an Al-based method that leverages advanced machine learning techniques.

As an example, for bi-optimization problem, the FOM is the Pareto front "Cost function *J_{α}* on the latency" against "Cost function *J_{Q}* on the performance metrics" computed for a given classified scene, given a status of the comm. system. For the latency cost, several functions can be envisioned:
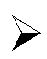 Worst: ${J}_{α} \left({α}_{1},…,{α}_{N}\right) = {max}_{n} {\left\{\left(1+{α}_{n}\right){T}_{s}\right\}}_{n}$
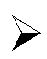 Average: ${J}_{α} \left({α}_{1}, …, {α}_{N}\right) = \frac{{\sum }_{n} \left(1+{α}_{n}\right) {T}_{s}}{N}$
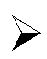 Utility-based average: ${J}_{α} \left({α}_{1}, …, {α}_{N}\right) = \frac{{\sum }_{n} U \left(\left(1+{α}_{n}\right){T}_{s}\right)}{N}$, with *U*(·) a utility function
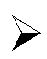 Median: ${J}_{α} \left({α}_{1}, … ,{α}_{N}\right) = \frac{{max}_{n} {\left\{\left(1+{α}_{n}\right){T}_{s}\right\}}_{n} - {min}_{n} {\left\{\left(1+{α}_{n}\right){T}_{s}\right\}}_{n}}{2}$

For the cost on the performance metrics, we can consider as follows several examples of variables of interest:
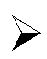 The video resolution *Rₙ*
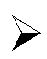 The video bitrate *Vβₙ*
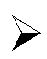 Minus the CRF index -*CRFₙ* or the inverse of the CRF index $\frac{1}{{CRF}_{n}}$
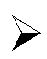 Minus the quantization parameter of the codec *QPₙ* or the inverse of the quantization parameter $\frac{1}{{QP}_{n}}$

Let's denote the variable of interest by a general term *Xₙ* where a great value of *Xₙ* is "better" than a low value of *Xₙ*. Then, for the cost on the performance metrics, several functions can be envisioned:
➢ 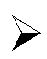 Worst: ${J}_{Q} \left({X}_{1},…,{X}_{N}\right) = {max}_{n} {\left\{-{X}_{n}\right\}}_{n} or {J}_{Q} = {max}_{n} {\left\{\frac{1}{{X}_{n}}\right\}}_{n}$
➢ 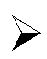 Average: ${J}_{Q} \left({X}_{1},…,{X}_{N}\right) = \frac{{Σ}_{n} - {X}_{n}}{N} or {J}_{Q} \left({X}_{1},…,{X}_{N}\right) = \frac{{Σ}_{n} \frac{1}{{X}_{n}}}{N}$
➢ 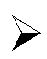 Utility-based average: ${J}_{Q} \left({X}_{1},…,{X}_{N}\right) = \frac{{Σ}_{n} U \left(-{X}_{n}\right)}{N} or {J}_{Q} \left({X}_{1},…,{X}_{N}\right) = \frac{{Σ}_{n} U \left(\frac{1}{{X}_{n}}\right)}{N}$
➢Median: ${J}_{Q} \left({X}_{1}, … ,{X}_{N}\right) = \frac{{max}_{n} {\left\{-{X}_{n}\right\}}_{n} - {min}_{n} {\left\{{X}_{n}\right\}}_{n}}{2}$ or ${J}_{Q} \left({X}_{1}, … ,{X}_{N}\right) = \frac{{max}_{n} {\left\{\frac{1}{{X}_{n}}\right\}}_{n} - {min}_{n} {\left\{\frac{1}{{X}_{n}}\right\}}_{n}}{2}$

For a single optimization problem, it can be solved, for example, using a weighted sum method, or an Al-based method.

As an example, we can also go for a single-variable problem by unifying the two cost functions *J_{α}*(*α*₁, ... , *α_{N}*) and *J_{Q}*(*X*₁*, ... , X_{N}*) within a single one *J_{α,Q}*(*α*₁, ... , *α_{N}, X*₁, ... , *X_{N}*). This is commonly known as the "weighted sum method". Consequently, the cost functions are the same, but the effective cost function is different: ${J}_{α , Q} \left({w}_{α},{α}_{1},…,{α}_{N},{w}_{Q},{X}_{1},…,{X}_{N}\right) = {w}_{α} {J}_{α} \left({α}_{1},…,{α}_{N}\right) + {w}_{Q} {J}_{Q} \left({X}_{1},…,{X}_{N}\right)$

Where *w_{α}, w_{Q}* are weights that could be set either in a uniform manner, or in any arbitrary manner considering the wish of the experimenter to better highlight one of the two cost functions. For example, set *w_{α}* = 0.75, *w_{Q}* = 0.25 to highlight the latency more than the performance metrics.

In addition to homogeneous multi-agent system wherein only one type of date steams, such as videos, it is also possible to generalize to heterogeneous multi-agent system which includes other stream natures (image, LiDAR measurements) than the video stream. To do so, it is focused on how to map the video bitrate with JPEG images, with LiDAR measurements. To keep consistency, we can also map the above variables:
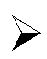 The video resolution
   ∘ It is defined exactly the same for image resolution
   ∘ The resolution being a number of pixels in each row and each column, we can still define it for LiDAR. For example, it could be the number of LiDAR points in each row and in each column of a measurement. It could be also the density of points in a given space window
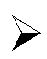 The CRF index
   ∘ For the JPEG, we use the JPEG quality factor that is a number between 0 and 100 that associates a numerical value with a particular compression level.
   ∘ For the LiDAR, we consider a puncturing ratio such that puncturing every 2 elements means "low quality" and puncturing every "N elements" with N LiDAR points means "no puncturing - max quality".
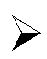 The quantization parameter
   ∘ It is defined exactly the same for image quantization parameter (JPEG)
   ∘ For LiDAR, it is likely to be the same as the puncturing ratio.

### - S6 ENCODING DATA STREAMS AND TRANSMITTING ENCODED DATA STREAMS

Once the FOM is computed, the raw data streams are encoded using the optimal encoding parameters determined by the FOM. The encoded data streams are then transmitted to the receiver using the optimal communication parameters determined by the FOM through the communication system.

The transmission process may involve various techniques, such as packet scheduling, error correction, and congestion control, to ensure reliable and efficient delivery of the encoded data streams. The specific techniques used may depend on the characteristics of the communication system and the QoS requirements of each data stream. For example, the communication system is a configurable QoS-based communication network, such as a 5G network.

As mentioned above, the present invention can be implemented in a homogeneous multi-agent system wherein all agents transmit the same type of data, such as video streams, JPEG images, or LiDAR measurements.

In an embodiment where all agents transmit video streams, the invention can optimize the video encoding parameters, such as video bitrate, Constant Rate Factor (CRF), quantization parameter (QP), and resolution The video bitrate determines the number of bits used to represent each second of video. The resolution determines the number of pixels to represent each frame of video. Similarly to the CRF and QP, they control the trade-off between video quality and compression efficiency.

The classification step may involve analyzing the motion and complexity of each video stream to determine the optimal encoding parameters. For example, a video stream with high motion and complexity may require a higher bitrate and a lower CRF or QP to maintain acceptable quality, while a video stream with low motion and complexity may be encoded with a lower bitrate and a higher CRF or QP to reduce the transmission overhead. In one another example, a neural network can be operated to extract characteristics through a features extraction algorithm which delivers a set of features well representative of the input video stream.

The communication parameters, such as GFBR and PDB, can also be optimized based on the characteristics of the video streams. For example, a video stream with high motion and complexity may require a higher GFBR and a shorter PDB to ensure smooth playback and low latency, while a video stream with low motion and complexity may be transmitted with a lower GFBR and a longer PDB to reduce the resource utilization.

The invention can also adapt the encoding and communication parameters dynamically based on the changing characteristics of the video streams. For example, if a video stream transitions from low level of details to high level of details , the invention can increase the bitrate or reduce the CRF or reduce the QP or increase the resolution to maintain acceptable quality, while also adjusting the GFBR and PDB to ensure smooth playback and low latency.

### - Video Streams

Below is a more detailed exemplary embodiment video streaming with video bitrate.

In this embodiment, we consider segment-based streaming video protocol, e.g., HLS (Apple HLS: HTTP Live Streaming) or DASH (MPEG DASH: Dynamic Adaptive Streaming over HTTP). HLS and DASH are video streaming protocols where:
▪ At the agent (or server) side, they split a video stream in multiple small videos called segment
▪ At the receiver (or client) side, the segments are decoded and read in a video playlist

The segments are self-contained compressed (H264/5/6) videos whose compressing parameters are:
▪ Resolution: 1280x720, ...
▪ Frame rate: 30fps, ...
▪ Video bitrate: 64kbits/sec, ...
▪ CRF: 1, 2, ...,
▪ Etc.

In addition, in this embodiment, the E2E latency is determined, firstly, by the segment building time duration being the sum of the acquisition time duration and the compressing time duration. We can consider that the compressing time duration is negligible in comparison with the acquisition time duration denoted by *T_{Sₙ}* for the n^{th} stream.

The E2E latency is determined, secondly, by the transfer time duration through the 5G communication network Δ_{5*G*}. According to 3GPP TS23.501, the QoS concern packets at the N6 interface, i.e., the QoS concern IP packets. Even though Δ_{5*G*} may comprise the time duration of navigating within the IP network, we do not consider it here because we do not have any enabler on this quantity in this technology. Here below is the figure of the E2E-latency decomposition where *Sₖ* stands for "k^{th} segment".

Consider now *K_{Sₙ}* the upper bound on the payload of any segment of the n^{th} stream after compression. Then, the associated maximum video bitrate of any of these segments is ${Vβ}_{n} = \frac{{K}_{{S}_{n}}}{{T}_{{S}_{n}}}$. *Vβₙ* is a parameter of the compressor such that the expected rendering quality increases with the video bitrate *Vβₙ. Vβₙ* tells us *K_{Sₙ}* the quantity of bits that represents the segment given the segment duration *T_{Sₙ}.* Define a flow as fluid when there is no interruption from the perspective of the receiver's player, it is then recommended that Δ_{5*G,n*} ≤ *T_{Sₙ}* to ensure the fluidity of the nth stream wherein Δ_{5*G,n*} is the transfer time duration for the nth agent. Therefore, the 5G comm. system must transfer *K_{Sₙ}* bits in at most *T_{Sₙ}* seconds, i.e., the required minimum datarate is the video bitrate *Vβₙ*.

Provided with the above considerations, we consider that the n^{th} agent connects to the 5G network with Guaranteed Bit-Rate (GBR) QoS flows (3GPP TS23.501) that allow to define for the n^{th} stream:
▪ the Guaranteed Flow Bit-Rate (GFBR) being, that we denote by *Fβₙ,* to be AT LEAST *Vβₙ,*
▪ the averaging measurement window *Wₙ* of *Fβₙ* that we define as a portion of the upper bound *T_{Sₙ}* , i.e., *Wₙ = αₙT_{sₙ},* with *αₙ* ∈ ]0; 1] (Δ_{5*G,n*} is equal to *Wₙ* in our representation)

Note for GFBR: In 3GPP TS23.501, Section 5.7.2.5, "For GBR QoS Flows only [...] the GFBR denotes the bit rate that is guaranteed to be provided by the network to the QoS Flow over the Averaging Time Window"*.*

This means that ${Fβ}_{n} = \frac{{K}_{{S}_{n}}}{{W}_{n}}$, i.e., ${Fβ}_{n} = \frac{{Vβ}_{n}}{{α}_{n}}$ and that the E2E latency is Δ*ₙ*= *T_{Sₙ} + Wₙ,* i.e., Δ*ₙ*= (1 + *αₙ*)*T_{Sₙ}*.

For the sake of simplicity, we do not include other latency components such as the latency for compression and the latency for IP routing in these equations. However, it is important to note that these components exist and could be added as an extra static quantity for a more comprehensive analysis. For example, an additional static latency component could be considered as an input that is not changeable. Although these additional latencies are not included in the current mathematical formulation, they can easily be incorporated by the skilled person in the art for a more detailed evaluation.

Specifying a 5QI also defines a PDB, a PER, etc. i.e., other QoS characteristics that are not necessarily specified in the current context. As a matter of fact, by defining a low PDB and a low PER, we strengthen the possibility to obtain a well-constrained QoS flow regarding the latency. In case the QoS flow is a DC-GBR flow, (Delay Critical GBR flow), therefore it strengthens even more this possibility. However, while GFBR is defined and the averaging time window is defined, the 5G communication system is expected to fulfil the requests if it accepts the QoS flow. Therefore, PDB and PER only represents additional features in the present embodiment.

Now, it comes down to the optimization problem. The 5G communication system has a limited amount for resource, therefore, it includes some inner strategy to accept or reject QoS requests. Upon the agents' QoS requests (GFBR *Fβ*₁, *..., Fβ_{N} +*

windows *W*₁, *..., W_{N}* (with *N* the number of streams)), the 5G communication system may consider:
▪ A maximum total data bitrate *Fβ_{TOT}* such that:
   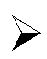 The sum of flow bitrates is upper bounded Σ*ₙ Fβₙ* ≤ *Fβ_{TOT}* computed in for example ${max}_{n} {W}_{n}$,
   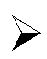 or the weighted sum of flow bitrates is upper bounded Σ*ₙ γₙFβₙ* ≤ *Fβ_{TOT}*, *γₙ* ≥ 0 computed in for example ${min}_{n} {W}_{n}$,
   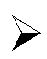 or a utility-based sum of flow bitrates is upper bounded Σ*ₙ U*(*Fβₙ*) ≤ *Fβ_{TOT}* computed in for example Σ*ₙ Wₙ*/*N*,
   > Etc.
▪ An implicit function *f*(*Fβ*₁, *..., Fβ_{N}, W*₁, ... , *W_{N}*) that returns "true" if it accepts all the QoS requests at once, "false" otherwise

Therefore, even though *Fβₙ,*Δ*ₙ, αₙ* is specific to the *n^{th}* video stream, in this embodiment it relates to a joint optimization under 5G constraints. We define for the *n^{th}* video stream the working interval *Vβₙ*^{(*th*)} ≤ *Vβₙ* ≤ *Vβₙ*^{(*id*)} where:
▪ *Vβₙ*^{(*th*)} *:* lower bound under which the rendering quality is unacceptable according to the receiver expectation
▪ *Vβₙ*^{(*id*)}: upper bound above which the rendering quality is not better

We can formulate the optimization problem: $\left(P1\right) {min}_{\left\{{α}_{1},…,{α}_{N}\right\}} {J}_{α} \left({α}_{1},…,{α}_{N}\right) & \left(P2\right) {min}_{\left\{{Vβ}_{1},…,{Vβ}_{N}\right\}} {J}_{Vβ} \left({Vβ}_{1},…,{Vβ}_{N}\right)$ $s . t . f \left(\frac{{Vβ}_{1}}{{α}_{1}},…,\frac{{Vβ}_{N}}{{a}_{N}},{W}_{1},…,{W}_{N}\right) = true , s . t . ∀ n , \left\{\begin{matrix}{{Vβ}_{n}}^{\left(th\right)} \leq {Vβ}_{n ′} \\ {Vβ}_{n} \leq {{Vβ}_{n}}^{\left(id\right)}\end{matrix}\right.$

Where (P1) ensures the greatest latency among all the streams is as low as possible and (P2) ensures the worst video quality among all the streams is as good as possible. Several explicit functions can be used for *J_{α}, J_{Vβ},* e.g.: ${J}_{α} \left({α}_{1},…,{α}_{N}\right) = {max}_{n} {\left\{\left(1+{α}_{n}\right){T}_{{S}_{n}}\right\}}_{n} ,$ $or {J}_{α} \left({α}_{1}, … ,{α}_{N}\right) = \frac{1}{N} {\sum }_{n} U \left(\left(1+{α}_{n}\right){T}_{{S}_{n}}\right)$ with *U*(.) a utility function, ${J}_{Vβ} \left({Vβ}_{1},…,{Vβ}_{N}\right) = {max}_{n} {\left\{{log}_{10}\frac{{{Vβ}_{n}}^{\left(id\right)}}{{Vβ}_{n}}\right\}}_{n} ,$ or ${J}_{Vβ} \left({Vβ}_{1}, … ,{Vβ}_{N}\right) = \frac{1}{N} {\sum }_{n} U \left({{Vβ}_{n}}^{\left(id\right)}-{Vβ}_{n}\right)$ with V(.) a utility function

Then, the optimal answers are: $\begin{matrix}\left\{{α}_{1}*,…,{α}_{N}*\right\} = arg {min}_{\left\{{α}_{1},…,{α}_{N}\right\}} {J}_{α} \left({α}_{1},…,{α}_{N}\right) , \\ & \left\{{Vβ}_{1}*,…,{Vβ}_{N}*\right\} = arg {min}_{\left\{{Vβ}_{1},…,{Vβ}_{N}\right\}} {J}_{Vβ} \left({Vβ}_{1},…,{Vβ}_{N}\right)\end{matrix}$

This bi-optimization problem can be solved through state-of-art methods, e.g., weighted sum method or *ε* -constraint method. Actually, this double optimization problem consists in discovering the Pareto front and selecting one point of this front. Here below we consider a simple exhaustive search.

In this example solution, we prioritize the two problems (P1) and (P2). In the present exemplary embodiment, the major objective is to ensure a real-time digital twin. A digital twin is a virtual representation of a physical object or system that is updated using data from sensors and other data sources. This digital model allows for monitoring, analysis, and optimization of the physical counterpart. Therefore,twe prioritize the latency problem (P1) to ensure that the digital twin remains accurate and up-to-date, reflecting the current state of the physical system without significant delays We derive an exhaustive « double nested loops » solution below.
1. Fix the situation: fix the segments duration {*T_{sₙ}*}*ₙ*, fix the working intervals {*Vβₙ*^{(*id*)}, *Vβₙ*^{(*th*)}}*ₙ*, fix the implicit 5G function *f*({*Fβₙ*, *Wₙ*}*ₙ*)
2. For any set of values {*αₙ*}*ₙ*:
   i. Compute the 1^{st} cost function: ${J}_{α} \left({α}_{1},…,{α}_{N}\right) = {max}_{n} {\left\{\left(1+{α}_{n}\right){T}_{{S}_{n}}\right\}}_{n}$
   ii. For any set of values {*Vβₙ*}*ₙ* such that *f*({*Fβₙ, Wₙ*}*ₙ*) is true and all the working intervals are respected, compute the 2^{nd} cost function: ${J}_{Vβ} \left({Vβ}_{1},…,{Vβ}_{N}\right) = {max}_{n} {\left\{{{Vβ}_{n}}^{\left(id\right)}-{Vβ}_{n}\right\}}_{n} = {max}_{n} {\left\{{log}_{10}\frac{{{Vβ}_{n}}^{\left(id\right)}}{{Vβ}_{n}}\right\}}_{n}$ and extract the minimum: $\left\{\begin{matrix}{J}_{Vβ} * = {min}_{\left\{{Vβ}_{1},…,{Vβ}_{N}\right\}} {J}_{Vβ} \left({Vβ}_{1},…,{Vβ}_{N}\right) \\ \left\{{Vβ}_{1}*,…,{Vβ}_{N}*\right\} = arg {min}_{\left\{{Vβ}_{1},…,{Vβ}_{N}\right\}} {J}_{Vβ} \left({Vβ}_{1},…,{Vβ}_{N}\right)\end{matrix}\right.$
3. Deduce one point on the Pareto front:$\left(Jα\left({α}_{1}, ... , {α}_{N}\right){, J}_{V β}*\right)$

Then, select one optimal on the Pareto front according to some external constraints, e.g.: ${{J}_{α}}^{*} = {min}_{\left\{{α}_{1},…,{α}_{N}\right\}} {J}_{α} \left({α}_{1}, … ,{α}_{N}\right)$ $\left\{{α}_{1}*,…,{α}_{N}*\right\} = arg {min}_{\left\{{α}_{1},…,{α}_{N}\right\}} {J}_{α} \left({α}_{1},…,{α}_{N}\right)$

### - JPEG Image Streams

In another embodiment where all agents transmit JPEG image streams, the invention can optimize the JPEG encoding parameters, such as quantization of frequency components, color depth, and sub-sampling. The streams could be made of JPEG image sequences only with no video encapsulation. Although less operational compared to H.264/5/6 compressors that offer better compression due to temporal prediction between frames, some video protocols like RTSP, SRT, or WebRTC transfer IP packets based on frames only, not on video segments. This is because some cameras carried by commercial UAVs are designed to transfer frame sequences only, not videos. Other non-video-based mechanisms that are purely image-based can also be used.

Regardless of the protocol, JPEG compression also uses an inner quality score, and the compression functions are very similar. It is known that the amplitudes of the frequency components are quantized. Human vision is much more sensitive to small variations in color or brightness over large areas than to the strength of high-frequency brightness variations. Therefore, the magnitudes of the high-frequency components are stored with a lower accuracy than the low-frequency components. The quality setting of the encoder (for example 50 or 95 on a scale of 0-100 in the Independent JPEG Group's library) affects to what extent the resolution of each frequency component is reduced. If an excessively low quality setting is used, the high-frequency components are discarded altogether. Therefore, the receiver could decide on a working interval for the quantization of the frequency components, valued in {1,2,...,100}. Similarly, the higher the quality, the larger the produced compressed frame.

The notion of latency is also at stake; therefore, it is possible to derive the same kind of framework in conjunction with the image rendering quality. Defining *T_{Sₙ}* as an acquisition time duration, e.g., the time to fill-in an APP buffer, an IP buffer, or any arbitrary time duration that is known at the encoding side.

In a particular example, the video stream could be a stream of sequences of images, i.e., a "video-like" image stream. In this case, the target is to stream a given number of JPEG images per seconds that is the definition of the commonly used *framerate.* By giving an upper bound on the JPEG image size, we are given the possibility to define *K_{Sₙ}* as the cumulated size of consecutive images within the time duration *T_{Sₙ}*. The flow bitrate still holds defining also *T_{Sₙ}* as the time duration for which *K_{Sₙ}* bits at least should be transmitted such that the framerate holds.

### - LiDAR Measurement Streams

In yet another embodiment where all agents transmit LiDAR measurement streams, the invention can optimize the LiDAR encoding parameters, such as puncturing and averaging of measurement points. The streams could be made of sequences of LiDAR measurements only. The compression would consist of puncturing measurement points or averaging over consecutive measurement points.

The puncturing could be specified by a parameter p≤1 such that:
▪ *p* = 0. No puncturing, keep all the measurement points
▪ *p* = 0.5. Puncture every two measurement points
▪ $p = \frac{k}{n}$. Puncture *k* measurement points every *n* points, either in a block manner or in any distributed manner

The lower the value of p, the larger the produced IP packets.

The averaging could also be specified by a parameter L≥0 such that:
- L=0: No averaging, keep all the measurement points
- L>0: Average by group of L measurement points every L/2 points

The higher the value of L (the higher the quality), the larger the produced IP packets.

By giving an upper bound on a single LiDAR measurement, we are given the possibility to define *K_{Sₙ}* as the cumulated size of consecutive measurements within the time duration *T_{Sₙ}*. The flow bitrate still holds defining also *T_{Sₙ}* as the time duration for which *K_{Sₙ}* bits at least should be transmitted such that the point rate holds.

Alternatively, the present invention can also be implemented in a heterogeneous multi-agent system, wherein the agents transmit different types of data, such as a combination of video streams, JPEG images, and/or LiDAR measurements. The present invention can optimize the encoding and communication parameters for each data type based on its specific characteristics and requirements.

One example of a heterogeneous multi-agent system is a 3D map reconstruction application, where multiple agents with different types of sensors collaborate to create a detailed 3D map of an environment. In this embodiment, some agents may transmit video streams of the environment, while others may transmit JPEG images and/or LiDAR measurements.

The invention can compute and optimize figure of merit including the encoding and communication parameters for each data type based on its specific characteristics and requirements, as well as the overall requirements of the 3D map reconstruction application. For example, the video streams may be encoded with a high video bitrate or a low CRF or a low QP to ensure high visual quality, while the JPEG images may be encoded with a high quality factor and a low level of sub-sampling to ensure accurate texture representation. The LiDAR measurements may be encoded with a low level of puncturing and averaging to ensure accurate geometry representation.

The communication parameters can also be optimized based on the specific requirements of each data type and the overall requirements of the 3D map reconstruction application. For example, the video streams may be transmitted with a high GFBR and a short PDB to ensure smooth playback and low latency, while the JPEG images may be transmitted with a moderate GFBR and a longer averaging time window to ensure timely delivery of the images. The LiDAR measurements may be transmitted with a low GFBR and a high PER to ensure accurate and reliable delivery of the measurements.

The invention can also adapt the encoding and communication parameters dynamically based on the changing characteristics of the environment and the requirements of the 3D map reconstruction application. For example, if the environment becomes more complex, the invention can increase the bitrate and reduce the CRF or QP of the video streams to ensure high visual quality, while also adjusting the GFBR and PDB to ensure smooth playback and low latency. Similarly, if the texture of the environment becomes more detailed, the invention can increase the quality factor and reduce the level of sub-sampling of the JPEG images to ensure accurate texture representation, while also adjusting the GFBR and averaging time window to ensure timely delivery of the images.

In summary, the present invention provides a comprehensive and flexible solution for optimizing data transmission in multi-agent systems, regardless of whether the agents transmit the same type of data or different types of data. By jointly considering the encoding and communication parameters, the requirements, and the interdependent QoS requests, the invention can find the optimal trade-off between E2E latency, performance, and resource utilization for each data stream, while also ensuring efficient and reliable transmission over the communication system.

Moreover, it is known to those skilled in the art, the aforementioned examples described above, according to the present invention, can be implemented in many ways, such as program instructions for execution by a processor, as software modules, microcode, as computer program product on computer readable media, as logic circuits, as application specific integrated circuits, as firmware, etc. The embodiments of the invention can take the form of an entirely hardware embodiment, an entirely software embodiment or an embodiment containing both hardware and software elements. In a preferred embodiment, the invention is implemented in software, which includes but is not limited to firmware, resident software, microcode, etc.

Furthermore, the embodiments of the invention can take the form of a computer program product accessible from a computer-usable or computer-readable medium providing program code for use by or in connection with a computer, processing device, or any instruction execution system. For the purposes of this description, a computer-usable or computer readable medium can be any apparatus that can contain, store, communicate, or transport the program for use by or in connection with the instruction execution system, apparatus, or device. The medium can be electronic, magnetic, optical, or a semiconductor system (or apparatus or device). Examples of a computer-readable medium include, but are not limited to, a semiconductor or solid state memory, magnetic tape, a removable computer diskette, a RAM, a read-only memory (ROM), a rigid magnetic disk, an optical disk, etc. Current examples of optical disks include compact disk-read-only memory (CD-ROM), compact disk-read/write (CD-R/W) and DVD.

The embodiments described hereinabove are illustrations of this invention.

The invention is defined by the claims.

## Claims

1. A method for optimizing data transmission in a multi-agent system comprising at least two agents, each agent comprising a stream classifier, an encoder and a transmitter, at least one node, and a computing module, comprising:
- obtaining (S17) raw data streams respectively from at least two agents;
- classifying (S2), by the stream classifier of each agent, the received raw data streams based on predetermined characteristics;
- obtaining (S3), by the computing module, requirements regarding end-to-end (E2E) latency and performance metrics from at least one node of the multi-agent system;
- obtaining (S4), by the computing module, a set of interdependent QoS requests for the raw data streams suitable for data transmission via a communication system;
- computing (S5), by the computing module, a figure of merit for all the raw data streams based on the classified raw data streams, the node requirements, and the set of interdependent QoS requests; and
- encoding (S6), by the encoder order of each agent, the raw data streams and transmitting, by the transmitter of each agent, through the communication system the encoded data streams to the node, according to the computed figure of merit,
wherein the figure of merit includes encoding and communication parameters for all the raw data streams,
wherein computing a figure of merit comprises:
- formulating a joint optimization problem to select optimal encoding and communication parameters for all agents, considering the receiver's requirements for the encoding parameters and the communication system's constraints; and
- solving the joint optimization problem using a bi-optimization approach, prioritizing the minimization of the maximum end-to-end latency among all encoded data streams and the maximization of the rendering quality among all encoded data streams.

2. The method of claim 1, wherein the communication parameters include at least one of Guaranteed Flow Bit Rate (GFBR), averaging time window, Packet Delay Budget (PDB), Packet Error Rate (PER), beamforming setting, antenna setting, and frequency band.

3. The method of claim 1, wherein the communication system is a configurable QoS-based communication network.

4. The method of claim 3, wherein obtaining a set of interdependent QoS requests comprises determining a set of QoS profiles that can be concurrently supported by the communication system while meeting the receiver's requirements.

5. The method of claim 1, wherein the raw data is video streams, and the encoding parameters for video streams include at least one of video bitrate, Constant Rate Factor (CRF), quantization parameter, resolution, color depth, and sub-sampling.

6. The method of claim 1, wherein the raw data is a JPEG image stream, and the encoding parameters for a JPEG image stream include at least one of quantization of frequency components, color depth, and sub-sampling.

7. The method of claim 1, wherein the raw data is a LiDAR measurement stream, and the encoding parameters for a LiDAR measurement stream include at least one of puncturing and averaging of measurement points.

8. The method of claim 1, wherein solving the optimization problem comprises using a double nested loop solution, considering the Pareto front of the bi-optimization problem.

9. The method of any of claims 1 to 7, wherein computing a figure of merit comprises:
- formulating a single optimization problem to select encoding and communication parameters for all agents, considering the receiver's requirements for the encoding parameters and the communication system's constraints;
- solving the single optimization problem using a weighted sum method, which combines the objectives of minimizing end-to-end (E2E) latency and maximizing rendering quality, wherein the balance between these objectives can be adjusted based on system requirements.

10. The method of any of claims 1to 9, wherein solving the optimization problem comprises using an Al based method including any one of linear programming, gradient-search, and genetic algorithms.

11. The method of claim 1, wherein the predetermined characteristics for classifying the captured raw data streams include at least one of scene content, motion, and complexity.

12. A multi-agent system for optimizing data transmission, comprising:
- a plurality of agents, each agent including:
- a sensor for capturing a scene and obtaining a raw data stream;
- a stream classifier for classifying the captured raw data stream based on predetermined characteristics;
- an encoder for encoding the raw data stream using a figure of merit; and
- a transmitter for transmitting the encoded data stream to a node of the multi-agent system according to the figure of merit;
- at least one node for receiving and decoding the transmitted encoded data streams and providing requirements regarding end-to-end (E2E) latency and performance metrics; and
- a computing module for computing the figure of merit for all the raw data streams based on the classified raw data streams, the node requirements, and a set of interdependent QoS requests for raw data streams suitable for data transmission via a communication system, wherein the figure of merit includes encoding and communication parameters for all the raw data streams, wherein computing a figure of merit by the computing module comprises formulating a joint optimization problem to select optimal encoding and communication parameters for all agents, considering the receiver's requirements for the encoding parameters and the communication system's constraints; and- solving the joint optimization problem using a bi-optimization approach, prioritizing the minimization of the maximum end-to-end latency among all encoded data streams and the maximization of the rendering quality among all encoded data streams.

13. A non-transitory computer-readable medium storing instructions that, when executed by a processor, cause the processor to perform a method of claim 1.

## Patentansprüche

1. Verfahren zum Optimieren einer Datenübertragung in einem Multi-Agenten-System, welches wenigstens zwei Agenten, wobei jeder Agent einen Datenstrom-Klassifikator, einen Encoder und einen Sender umfasst, wenigstens einen Knoten und ein Rechenmodul umfasst, umfassend:
- Erhalten (S1) von Rohdatenströmen jeweils von wenigstens zwei Agenten;
- Klassifizieren (S2), durch den Datenstrom-Klassifikator jedes Agenten, der empfangenen Rohdatenströme basierend auf vorbestimmten Eigenschaften;
- Erhalten (S3), durch das Rechenmodul, von Anforderungen bezüglich der Ende-zu-Ende-(E2E-)Latenz und der Leistungsmetriken von wenigstens einem Knoten des Multi-Agenten-Systems;
- Erhalten (S4), durch das Rechenmodul, eines Satzes voneinander abhängiger QoS-Anforderungen für die Rohdatenströme, welche für eine Datenübertragung über ein Kommunikationssystem geeignet sind;
- Berechnen (S5), durch das Rechenmodul, einer Gütezahl für alle Rohdatenströme basierend auf den klassifizierten Rohdatenströmen, den Knotenanforderungen und dem Satz voneinander abhängiger QoS-Anforderungen; und
- Codieren (S6), durch die Encoder-Reihenfolge jedes Agenten, der Rohdatenströme und Übertragen, durch den Sender jedes Agenten, der codierten Datenströme durch das Kommunikationssystem an den Knoten, gemäß der berechneten Gütezahl,
wobei die Gütezahl Codierungs- und Kommunikationsparameter für alle Rohdatenströme umfasst,
wobei das Berechnen einer Gütezahl umfasst:
- Formulieren eines gemeinsamen Optimierungsproblems, um optimale Codierungs- und Kommunikationsparameter für alle Agenten unter Berücksichtigung der Anforderungen des Empfängers an die Codierungsparameter und der Randbedingungen des Kommunikationssystems auszuwählen; und
- Lösen des gemeinsamen Optimierungsproblems unter Verwendung eines Bi-Optimierungsansatzes, wobei die Minimierung der maximalen Ende-zu-Ende-Latenz unter allen codierten Datenströmen und die Maximierung der Rendering-Qualität unter allen codierten Datenströmen priorisiert werden.

2. Verfahren nach Anspruch 1, wobei die Kommunikationsparameter wenigstens eines umfassen, aus einer Guaranteed Flow Bit Rate (GFBR), einem Mittelungszeitfenster, einem Packet Delay Budget (PDB), einer Packet Error Rate (PER), einer Beamforming-Einstellung, einer Antenneneinstellung und einem Frequenzband.

3. Verfahren nach Anspruch 1, wobei das Kommunikationssystem ein konfigurierbares QoS-basiertes Kommunikationsnetz ist.

4. Verfahren nach Anspruch 3, wobei ein Erhalten eines Satzes voneinander abhängiger QoS-Anforderungen ein Bestimmen eines Satzes von QoS-Profilen umfasst, welche gleichzeitig durch das Kommunikationssystem unterstützt werden können, während die Anforderungen des Empfängers erfüllt werden.

5. Verfahren nach Anspruch 1, wobei die Rohdaten Videoströme sind und die Codierungsparameter für Videoströme wenigstens eines umfassen, aus einer Video-Bitrate, einem Constant Rate Factor (CRF), einem Quantisierungsparameter, einer Auflösung, einer Farbtiefe und einer Unterabtastung.

6. Verfahren nach Anspruch 1, wobei die Rohdaten ein JPEG-Bildstrom sind und die Codierungsparameter für einen JPEG-Bildstrom wenigstens eines umfassen, aus einer Quantisierung von Frequenzkomponenten, einer Farbtiefe und einer Unterabtastung.

7. Verfahren nach Anspruch 1, wobei die Rohdaten ein LiDAR-Messstrom sind und die Codierungsparameter für einen LiDAR-Messstrom wenigstens eines umfassen, aus einer Punktierung und einer Mittelung von Messpunkten.

8. Verfahren nach Anspruch 1, wobei ein Lösen des Optimierungsproblems eine Verwendung einer doppelt verschachtelten Schleifenlösung unter Berücksichtigung der Pareto-Front des Bi-Optimierungsproblems umfasst.

9. Verfahren nach einem der Ansprüche 1 bis 7, wobei ein Berechnen einer Gütezahl umfasst:
- Formulieren eines einzelnen Optimierungsproblems zur Auswahl von Codierungs- und Kommunikationsparametern für alle Agenten unter Berücksichtigung der Anforderungen des Empfängers an die Codierungsparameter und der Randbedingungen des Kommunikationssystems;
- Lösen des einzelnen Optimierungsproblems unter Verwendung einer gewichteten Summenmethode, welche die Ziele einer Minimierung der Ende-zu-Ende-(E2E-)Latenz und einer Maximierung der Rendering-Qualität kombiniert, wobei das Gleichgewicht zwischen diesen Zielen basierend auf den Systemanforderungen angepasst werden kann.

10. Verfahren nach einem der Ansprüche 1 bis 9, wobei ein Lösen des Optimierungsproblems eine Verwendung eines KI-basierten Verfahrens umfasst, welches eines umfasst, aus einer linearen Programmierung, einer Gradientensuche und genetischen Algorithmen.

11. Verfahren nach Anspruch 1, wobei die vorbestimmten Eigenschaften zum Klassifizieren der erfassten Rohdatenströme wenigstens eines umfassen, aus einem Szeneninhalt, einer Bewegung und einer Komplexität.

12. Multi-Agenten-System zum Optimieren einer Datenübertragung, umfassend:
- eine Mehrzahl von Agenten, wobei jeder Agent umfasst:
- einen Sensor zum Erfassen einer Szene und Erhalten eines Rohdatenstroms;
- einen Datenstrom-Klassifikator zum Klassifizieren des erfassten Rohdatenstroms basierend auf vorbestimmten Eigenschaften;
- einen Encoder zum Codieren des Rohdatenstroms unter Verwendung einer Gütezahl; und
- einen Sender zum Übertragen des codierten Datenstroms an einen Knoten des Multi-Agenten-Systems gemäß der Gütezahl;
- wenigstens einen Knoten zum Empfangen und Decodieren der übertragenen codierten Datenströme und zum Bereitstellen von Anforderungen bezüglich der Ende-zu-Ende-(E2E-)Latenz und der Leistungsmetriken; und
- ein Rechenmodul zum Berechnen der Gütezahl für alle Rohdatenströme basierend auf den klassifizierten Rohdatenströmen, den Knotenanforderungen und einem Satz voneinander abhängiger QoS-Anforderungen für Rohdatenströme, welche für die Datenübertragung via eines Kommunikationssystems geeignet sind, wobei die Gütezahl Codierungs- und Kommunikationsparameter für alle Rohdatenströme umfasst, wobei ein Berechnen einer Gütezahl durch das Rechenmodul ein Formulieren eines gemeinsamen Optimierungsproblems, um optimale Codierungs- und Kommunikationsparameter für alle Agenten auszuwählen, unter Berücksichtigung der Anforderungen des Empfängers an die Codierungsparameter und der Randbedingungen des Kommunikationssystems umfasst; und ein Lösen des gemeinsamen Optimierungsproblems unter Verwendung eines Bi-Optimierungsansatzes, wobei die Minimierung der maximalen Ende-zu-Ende-Latenz unter allen codierten Datenströmen und die Maximierung der Rendering-Qualität unter allen codierten Datenströmen priorisiert werden.

13. Nicht-transitorisches computerlesbares Medium, welches Anweisungen speichert, welche, wenn sie von einem Prozessor ausgeführt werden, den Prozessor dazu veranlassen, ein Verfahren nach Anspruch 1 durchzuführen.

## Revendications

1. Procédé d'optimisation de transmission de données dans un système multi-agents comprenant au moins deux agents, chaque agent comprenant un classificateur de flux, un encodeur et un émetteur, au moins un nœud, et un module de calcul, comprenant :
- l'obtention (S1) de flux de données brutes respectivement à partir d'au moins deux agents ;
- la classification (S2), par le classificateur de flux de chaque agent, des flux de données brutes reçus sur la base de caractéristiques prédéterminées ;
- l'obtention (S3), par le module de calcul, d'exigences concernant des métriques de latence et de performance de bout en bout (E2E) à partir d'au moins un nœud du système multi-agents ;
- l'obtention (S4), par le module de calcul, d'un ensemble de requêtes de QoS interdépendantes pour les flux de données brutes adaptés à la transmission de données via un système de communication ;
- le calcul (S5), par le module de calcul, d'un facteur de mérite pour tous les flux de données brutes sur la base des flux de données brutes classifiés, des exigences de nœud et de l'ensemble de requêtes de QoS interdépendantes ; et
- l'encodage (S6), par l'ordre d'encodeur de chaque agent, des flux de données brutes et la transmission, par l'émetteur de chaque agent, à travers le système de communication, des flux de données encodés au nœud, selon le facteur de mérite calculé,
dans lequel le facteur de mérite inclut des paramètres d'encodage et de communication pour tous les flux de données brutes,
dans lequel le calcul d'un facteur de mérite comprend :
- la formulation d'un problème d'optimisation conjointe pour sélectionner des paramètres d'encodage et de communication optimaux pour tous les agents, en tenant compte des exigences du récepteur pour les paramètres d'encodage et des contraintes du système de communication ; et
- la résolution du problème d'optimisation conjointe à l'aide d'une approche de bi-optimisation, en donnant la priorité à la minimisation de la latence maximale de bout en bout parmi tous les flux de données encodés et à la maximisation de la qualité de rendu parmi tous les flux de données encodés.

2. Procédé selon la revendication 1, dans lequel les paramètres de communication incluent au moins l'un parmi un débit binaire de flux garanti (GFBR), une fenêtre de temps de moyenne, un budget de retard de paquet (PDB), un taux d'erreur de paquet (PER), un réglage de la formation de faisceaux, un réglage d'antenne et une bande de fréquence.

3. Procédé selon la revendication 1, dans lequel le système de communication est un réseau de communication configurable basé sur la QoS.

4. Procédé selon la revendication 3, dans lequel l'obtention d'un ensemble de requêtes de QoS interdépendantes comprend la détermination d'un ensemble de profils de QoS qui peuvent être pris en charge simultanément par le système de communication tout en répondant aux exigences du récepteur.

5. Procédé selon la revendication 1, dans lequel les données brutes sont des flux vidéo, et les paramètres d'encodage pour les flux vidéo incluent au moins l'un parmi un débit binaire vidéo, un facteur de débit constant (CRF), un paramètre de quantification, une résolution, une profondeur de couleur et un sous-échantillonnage.

6. Procédé selon la revendication 1, dans lequel les données brutes sont un flux d'images JPEG, et les paramètres d'encodage pour un flux d'images JPEG incluent au moins l'un parmi une quantification de composantes de fréquence, une profondeur de couleur et un sous-échantillonnage.

7. Procédé selon la revendication 1, dans lequel les données brutes sont un flux de mesure LiDAR, et les paramètres d'encodage pour un flux de mesure LiDAR incluent au moins l'une parmi la perforation et la moyenne de points de mesure.

8. Procédé selon la revendication 1, dans lequel la résolution du problème d'optimisation comprend l'utilisation d'une solution de boucle doublement imbriquée, en tenant compte du front de Pareto du problème de bi-optimisation.

9. Procédé selon l'une quelconque des revendications 1 à 7, dans lequel le calcul d'un facteur de mérite comprend :
- la formulation d'un problème d'optimisation unique pour sélectionner des paramètres d'encodage et de communication pour tous les agents, en tenant compte des exigences du récepteur pour les paramètres d'encodage et des contraintes du système de communication ;
- la résolution du problème d'optimisation unique à l'aide d'un procédé de somme pondérée, qui combine les objectifs de minimisation de la latence de bout en bout (E2E) et de maximisation de la qualité de rendu, dans lequel l'équilibre entre ces objectifs peut être ajusté sur la base d'exigences du système.

10. Procédé selon l'une quelconque des revendications 1 à 9, dans lequel la résolution du problème d'optimisation comprend l'utilisation d'un procédé basé sur l'IA incluant l'un quelconque parmi des algorithmes de programmation linéaire, de recherche de gradient et génétiques.

11. Procédé selon la revendication 1, dans lequel les caractéristiques prédéterminées pour classifier les flux de données brutes capturées incluent au moins l'un parmi un contenu de scène, un mouvement et une complexité.

12. Système multi-agents d'optimisation de transmission de données, comprenant :
- une pluralité d'agents, chaque agent incluant :
- un capteur pour capturer une scène et obtenir un flux de données brutes ;
- un classificateur de flux pour classifier le flux de données brutes capturées sur la base de caractéristiques prédéterminées ;
- un encodeur pour encoder le flux de données brutes à l'aide d'un facteur de mérite ; et
- un émetteur pour transmettre le flux de données encodé à un nœud du système multi-agents selon le facteur de mérite ;
- au moins un nœud pour recevoir et décoder les flux de données encodés transmis et fournir des exigences concernant la latence de bout en bout (E2E) et des métriques de performance ; et
- un module de calcul pour calculer le facteur de mérite pour tous les flux de données brutes sur la base des flux de données brutes classifiés, des exigences de nœud et d'un ensemble de requêtes de QoS interdépendantes pour des flux de données brutes adaptées à la transmission de données via un système de communication, dans lequel le facteur de mérite inclut des paramètres d'encodage et de communication pour tous les flux de données brutes, dans lequel le calcul d'un facteur de mérite par le module de calcul comprend la formulation d'un problème d'optimisation conjointe pour sélectionner des paramètres d'encodage et de communication optimaux pour tous les agents, en tenant compte des exigences du récepteur pour les paramètres d'encodage et des contraintes du système de communication ; et la résolution du problème d'optimisation conjointe à l'aide d'une approche de bi-optimisation, en donnant la priorité à la minimisation de la latence maximale de bout en bout parmi tous les flux de données encodés et à la maximisation de la qualité de rendu parmi tous les flux de données encodés.

13. Support non transitoire lisible par ordinateur stockant des instructions qui, lorsqu'elles sont exécutées par un processeur, amènent le processeur à réaliser un procédé selon la revendication 1.
